# EUROPÄISCHE PATENTSCHRIFT

(11) **EP 3 233 729 B1**
(45) Veröffentlichungstag und Bekanntmachung des Hinweises auf die Patenterteilung: **21.08.2019**
(21) Anmeldenummer: 15841039.9
(22) Anmeldetag: 08.12.2015
(51) Int. Cl.: C01B 33/107, C07F 7/21, C07F 7/08

(54) **VERFAHREN ZUM HERSTELLEN VON PERHALOGENIERTEM CYCLOHEXASILAN-ANION**
METHOD FOR PRODUCING PERHALOGENATED CYCLOHEXASILANE ANION
PROCÉDÉ DE PRODUCTION D'UN ANION PERHALOGÉNÉ DE CYCLOHEXASILANE

(30) Priorität: 15.12.2014 DE 102014118658; 14.04.2015 DE 102015105690
(43) Veröffentlichungstag der Anmeldung: 25.10.2017
(60) Teilanmeldung: 18150034.9
(73) Patentinhaber: Evonik Degussa GmbH, 45128 Essen (DE)
(72) Erfinder: WAGNER, Matthias, 61194 Niddatal (DE); LERNER, Hans-Wolfram, 61440 Oberursel (DE); TILLMANN, Jan, 80798 München (DE); MOXTER, Maximilian, 64546 Mörfelden-Walldorf (DE)
(74) Vertreter: Scholz, Volker
(86) Internationale Anmeldenummer: PCT/DE2015/100522
(87) Internationale Veröffentlichungsnummer: WO 2016/095898

(56) Entgegenhaltungen:
- WO-A1-2011/094191
- US-A1- 2014 012 029
- US-A1- 2014 012 030
- TILLMANN J ET AL: "Chloride-Induced Aufbau of Perchlorinated Cyclohexasilanes from Si2Cl6: A Mechanistic Scenario", CHEMISTRY - A EUROPEAN JOURNAL, WILEY - V C H VERLAG GMBH & CO. KGAA, WEINHEIM, DE, Bd. 20, Nr. 30, 21. Juli 2014 (2014-07-21) , Seiten 9234-9238, XP002738803, ISSN: 0947-6539, DOI: 10.1002/CHEM.201402655 [gefunden am 2014-04-25]
- JAN TILLMANN ET AL: "Unexpected Disproportionation of Tetramethylethylenediamine-Supported Perchlorodisilane Cl3SiSiCl3", INORGANIC CHEMISTRY, AMERICAN CHEMICAL SOCIETY, EASTON, US, Bd. 51, Nr. 15, 1. Januar 2012 (2012-01-01), Seiten 8599-8606, XP002738802, ISSN: 0020-1669, DOI: 10.1021/IC201283M [gefunden am 2012-07-12]

## Beschreibung

Die vorliegende Erfindung betrifft ein Verfahren zum Herstellen von perhalogeniertem Cyclohexasilan-Anion.

Perhalogenierte Oligo- und Polysilane, wie perhalogeniertes Cyclohexasilan, sind die Grundlage für verschiedenste material-orientierte Anwendungen, wie beispielsweise die Herstellung von amorphem Silicium, leitenden Polymeren, Silicium-Schichten oder auch Wasserstoffspeichermedien, die wiederum in vielen Bereichen der Industrie von großer Bedeutung sind.

Im Stand der Technik sind bereits einige Verfahren zur Herstellung von perhalogenierten Cyclohexasilanverbindungen bekannt. US 2014/0012030 A1 beschreibt beispielsweise ein Verfahren zum Herstellen einer cyclischen Silanverbindung, indem eine halogenierte Silanverbindung in der Anwesenheit eines Ammonium- bzw. Phosphoniumsalzes und einer als Chelat-Komplex fungierenden Verbindung bei 0 bis 120°C in einem Lösungsmittel umgesetzt wird.

JP 2013 095697A betrifft ein Verfahren zum Herstellen eines Hexasilan-Anions, wobei Trichlorsilan tropfenweise zu einem Gemisch aus [*n*Bu₄N]Cl, Diisopropylethylamin und 1,2-Dichlorethan bei 25°C gegeben wird. Das Gemisch wird zunächst bei 25°C für zwei Stunden und schließlich bei 50°C für 24 Stunden gerührt, um [*n*Bu₄N]₂[Si₆Cl₁₄] zu erhalten.

In JP 2013 203601A wird Cyclohexasilan in einem Reaktor durch Cyclisierung von trihalogenierten Silanen hergestellt, wobei zunächst die entsprechenden Anionen von [Si₆X₁₄]²⁻ gebildet werden. Diese werden filtriert und zu den entsprechenden Cyclohexasilanverbindungen reduziert.

Präparativ weniger aufwendig ist das in WO 2011 094191A1 beschriebene Verfahren zur Herstellung des cyclischen Hexasilan-Anions [Si₆Cl₁₄]²⁻. Dieses wird ausgehend von Trichlorsilan durch Umsetzung mit einem tertiären Polyaminliganden, genauer einem alkylsubstituierten Polyalkylenpolyamin, und einem Deprotonierungsmittel, wie einem tertiären Amin, erhalten.

DE 3126240 C2 betrifft ein Verfahren zur Herstellung von metallischem Silicium, in dem die Umsetzung von Si₂Cl₆ mit einem Katalysator aus der Gruppe der Ammoniumhalogenide, tertiären organischen Amine, quartären Ammonium- und Phosphoniumhalogenide bei einer Temperatur von 70 bis 150°C zu höheren Silanen als Si₂Cl₆ beschrieben wird. Als Katalysator wird beispielsweise Tetrabutylphosphoniumchlorid verwendet. Allerdings werden in dieser Druckschrift keine genaueren Angaben zu den Strukturen oder der Produktzusammensetzung der erhaltenen perchlorierten Polysilane gemacht.

Nachteilig ist bei den bekannten Verfahren zum Herstellen von perhalogenierten Cyclohexasilan-Anionen, dass es durch die Verwendung von Lösungsmitteln und basischen Zusätzen, wie Aminen, zur vermehrten Bildung von Nebenprodukten kommt, welche nur schwer oder äußerst unzureichend von dem gewünschten Produkt getrennt werden können. Als Folge kann das Produkt nur in geringen Ausbeuten erhalten werden. Durch den Einsatz zusätzlicher Additive oder teurer Ausgangsverbindungen sind die beschriebenen Verfahren zudem oftmals sehr kostspielig.

US2014/012029A1 bezieht sich auf ein Verfahren, welches unter Verwendung eines cyclischen Silandianionsalzes als Rohmaterial die effiziente Gewinnung von Cyclohexasilan ohne Bildung von Nebenprodukten wie Silangas erlaubt. Das Verfahren zur Herstellung von Cyclohexasilan weist das Merkmal auf, dass ein cyclisches Silandianionsalz mit einem Reduktionsmittel auf Aluminiumbasis oder einem Reduktionsmittel auf Borbasis umgesetzt wird.

US2014/012030A1 bezieht sich auf ein Herstellungsverfahren, mit welchem effizient eine cyclische Silanverbindung oder ein Salz davon mit hoher Ausbeute herstellt werden kann, sowie auf ein neuartiges Salz der cyclischen Silanverbindung mit einem leicht handhabbaren cyclischen Silandianion. Das Verfahren zur Herstellung einer cyclischen Silanverbindung oder eines Salzes davon umfasst den Schritt des Ermöglichens einer Reaktion einer Halogensilanverbindung in Gegenwart von mindestens einem Phosphoniumsalz und einem Ammoniumsalz. Es ist eine Aufgabe der vorliegenden Erfindung, ein Verfahren zum Herstellen von perhalogeniertem Cyclohexasilan-Anion bereitzustellen, das die aus dem Stand der Technik bekannten Nachteile überwindet. Insbesondere soll ein vereinfachtes Verfahren bereitgestellt werden, mit dem perhalogeniertes Cyclohexasilan-Anion in kostengünstiger Weise bei vergleichsweise tiefen Temperaturen sowie in hoher Reinheit und mit hohen Ausbeuten hergestellt werden kann.

Die Aufgabe wird gelöst durch ein Verfahren zum Herstellen von perhalogeniertem Cyclohexasilan-Anion durch Umsetzen von halogeniertem Monosilan in Anwesenheit von organosubstituiertem Ammonium- und/oder Phosphoniumhalogenid bei Temperaturen in einem Bereich von 100 bis 120°C, wobei kein Lösungsmittel verwendet wird und keine zusätzliche Lewis-Base zugegeben wird, das halogenierte Monosilan Trichlorsilan oder Dichlorsilan ist und das organosubstituierte Ammonium- und/oder Phosphoniumhalogenid aus [*n*Bu₄N]Cl, [Et₄N]Cl, [Ph₄P]Cl und [*n*Bu₄P]Cl ausgewählt ist.

Es soll unter einem Cycloheasilan-Anion ein cyclisches Hexasilan-Anion der Formel [Si₆X₁₄]²⁻ verstanden werden, wobei X ausgewählt ist aus Chlor, Brom, Iod und Fluor, auch in gemischter Substitution, bevorzugt Chlor oder Brom. Ein perhalogeniertes Hexasilan-Anion ist im Sinne der vorliegenden Erfindung vollständig mit Chloratomen substituiert.

Im Rahmen der vorliegenden Erfindung soll unter einem halogenierten Monosilan vorzugsweise eine Verbindung der Formel SiHₙX₄₋ₙ verstanden werden, wobei n = 1 oder 3 ist und X Chlor ist.

Das halogenierte Monosilan ist Trichlorsilan oder Dichlorsilan, vorzugsweise Trichlorsilan.

Desweiteren ist vorgesehen, dass keine zusätzliche Lewis-Base, vorzugsweise kein Amin und/oder Phosphan, zugegeben wird.

Eine Ausführungsform zeichnet sich dadurch aus, dass die Reaktionszeit 12 bis 96 Stunden, vorzugsweise 24 bis 48 Stunden beträgt.

Ferner ist bevorzugt, dass das Verhältnis von halogeniertem Monosilan zu organosubstituiertem Ammonium- und/oder Phosphoniumhalogenid 3:1 bis 50:1, vorzugsweise 10:1 bis 20:1 beträgt.

Erfindungsgemäß ist, dass es sich bei dem organosubstituierten Ammonium- und/oder Phosphoniumhalogenid um [*n*Bu₄N]Cl, [Et₄N]Cl, [Ph₄P]Cl und [*n*Bu₄P]Cl handelt.

Auch ist bevorzugt vorgesehen, dass bei der Herstellung des Cyclohexasilan-Anions Wasserstoff (H₂) als Nebenprodukt erhalten wird.

Überraschenderweise konnte festgestellt werden, dass das vereinfachte lösungsmittelfreie Verfahren die Herstellung von perhalogeniertem Cyclohexasilan-Anion in hoher Reinheit und mit hohen Ausbeuten von bis zu 80% ausgehend von halogeniertem Monosilan ermöglicht. Im Gegensatz zum bekannten Stand der Technik, in dem die eingesetzten Amine typischerweise als Deprotonierungsmittel fungieren (R₃N + HCl → R₃HNCl), läuft vorliegend eine Redoxreaktion mit einhergehender H₂-Abspaltung ab. Während der vorliegenden Synthese zur Herstellung des Cyclohexasilan-Anions kommt es zwangsläufig zur Bildung der Nebenprodukte H₂ und SiCl₄ sowie gegebenenfalls zur Bildung der Nebenprodukte H₂SiCl₂ und [Si₆Cl₁₃H]²⁻. Die bei der Reaktion entstehenden Nebenprodukte H₂ und H₂SiCl₂ können aufgrund ihrer niedrigen Siedepunkte von -252°C und 8,4°C in einfacher Weise entfernt werden, da diese unter Normalbedingungen gasförmig sind und somit keine speziellen Reinigungsschritte erfordern. Überschüssiges HSiCl₃ kann aufgrund seines niedrigen Siedepunkts von 32°C durch Anlegen von Vakuum entfernt oder in einer geeigneten Apparatur der Reaktion wieder zugeführt werden. Überdies ist das verwendete Trichlorsilan kostengünstiger als das häufig verwendete Si₂Cl₆. Ferner kann das durch Hydrierung erhaltene Nebenprodukt [Si₆Cl₁₃H]²⁻, analog zu dem perhalogenierten Cyclohexasilan-Anion, zum gewünschten Folgeprodukt, Cyclohexasilan, umgesetzt werden.

Ein weiterer Vorteil des Verfahrens zum Herstellen von perhalogeniertem Cyclohexasilan-Anion ist der Ausschluss von Nebenprodukten, die bei der Aktivierung von Lösungsmittel entstehen würden. Die Bildung solcher lösungsmittelabhängigen Nebenprodukte erfordert oftmals eine arbeitsintensive Reinigung des gewünschten Produktes. Von Vorteil ist auch der bevorzugte Verzicht auf zusätzliche Lewis-Basen, wie Amine und Phosphane, da die Reinheit des Produktes angesichts einer geringen Nebenproduktbildung erhöht wird. Zudem entfällt die Abtrennung der Lewis-Base von dem gewünschten Produkt, die aufgrund der hohen Siedepunkte der typischerweise eingesetzten Amine aufwendige Reinigungsschritte erforderlich machen würde. Durch den Verzicht auf Lösungsmittel und weitere Additive wird zudem eine kosteneffizientere Synthese ermöglicht. Trotz des vereinfachten Verfahrens ist es möglich, das gewünschte Produkt in einer verkürzten Reaktionszeit von 24 bis 48 Stunden zu erhalten.

Weitere Merkmale und Vorteile der Erfindung ergeben sich aus der nachfolgenden Beschreibung, Zeichnungen und Ausführungsbeispielen. Dabei zeigt:
Fig. 1 ein in CD₂Cl₂ gemessenes ²⁹Si-{¹H}-NMR-Spektrum, der in der Variante A der Synthese von [*n*Bu₄N]₂[Si₆Cl₁₄] erhaltenen Lösung.
Fig. 2 ein in CD₂Cl₂ gemessenes ²⁹Si-NMR-Spektrum, des in der Variante A der Synthese von [*n*Bu₄N]₂[Si₆Cl₁₄] erhaltenen Feststoffes. Das in Fig. 2 gezeigte ²⁹Si-NMR-Spektrum des Rohproduktes wurde nach dem Anlegen von Vakuum in CD₂Cl₂ gemessen und belegt die geringe Nebenproduktbildung.
Fig. 3 ein in C₆D₆ gemessenes ²⁹Si-NMR-Spektrum, der in der Variante B der Synthese von [*n*Bu₄N]₂[Si₆Cl₁₄] erhaltenen Lösung.
Fig. 4 ein in C₆D₆ gemessenes ¹H-NMR-Spektrum, der in der Variante B der Synthese von [*n*Bu₄N]₂[Si₆Cl₁₄] erhaltenen Lösung.

### Allgemeine Arbeitsbedingungen

Alle Reaktionen im Verfahren zum Herstellen von perhalogeniertem Cyclohexasilan-Anion wurden unter trockenem Argon oder Stickstoff durchgeführt. CD₂Cl₂ wurde über CaH₂ getrocknet und vor der Verwendung frisch destilliert. HSiCl₃ und [*n*Bu₄N]Cl sind im Handel erhältlich; [*n*Bu₄N]Cl wurde im Vakuum bei Raumtemperatur für 2 d getrocknet. ²⁹Si-NMR-Spektren wurden mit einem Bruker Avance III HD 500 MHz Spektrometer aufgenommen; die Spektren wurden gegen den externen Standard SiMe₄ (*δ*(²⁹Si) = 0) kalibriert.

### Synthese von [nBu₄N]₂[Si₆Cl₁₄]

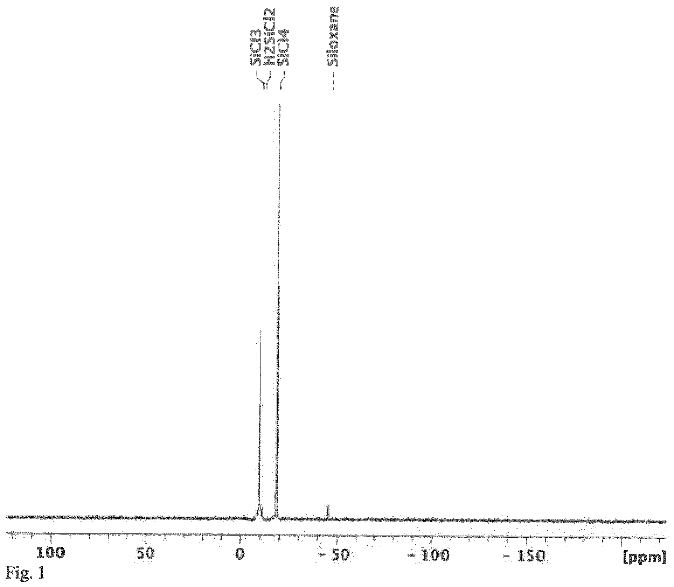

*Variante A:* Ein Glas wurde in einen Autoklav gestellt und, in einer Argon-Glovebox, mit [*n*Bu₄N]Cl (5.0 g, 18 mmol) und HSiCl₃ (30 mL, 40.2 g, 297 mmol) gefüllt. Der Autoklav wurde verschlossen und mit 5000 kPa (50 bar) Stickstoffdruck auf seine Dichtigkeit geprüft. Anschließend wurde das Reaktionsgemisch auf 100 bis 120 °C für 44 h erhitzt. Während der Reaktionsdauer herrschte im Autoklav ein leichter Überdruck von ca. 500 kPa (5 bar). Die Temperatur wurde an der Außenseite des Autoklaven zwischen Metallwand und Heizmantel gemessen. Nachdem das Reaktionsgefäß abgekühlt war, wurde im Gefäß dreimal mit Stickstoff ein Druck von 5000 kPa (50 bar) erzeugt und dieser wieder abgelassen, um entstandenen Wasserstoff und H₂SiCl₂ zu entfernen. Das Glas wurde im Argon Gegenstrom entnommen. In dem Glas befand sich eine große Menge weißer Feststoff über einer geringen Menge klarer farbloser Flüssigkeit (die Mengen sind relativ zu den Mengen eingesetzter Edukte, HSiCl₃ und [*n*Bu₄N]Cl, zu verstehen). Ein ²⁹Si{¹H}-NMR-Spektrum in CD₂Cl₂ der Lösung zeigte hauptsächlich die chemische Verschiebung von HSiCl₃ (-10.0 ppm) und SiCl₄ (-18.9 ppm). Als Minderkomponenten konnten im ²⁹Si{¹H}-NMR-Spektrum der Lösung außerdem H₂SiCl₂ (-11.5 ppm) und ein nicht eindeutig identifizierbares Siloxan (-46.0 ppm, z.B. Cl₃SiOSiCl₃) oder eine Mischung verschiedener Siloxane nachgewiesen werden (siehe Fig. 1). Die Herkunft des Siloxans ist nicht bekannt, die Quelle könnte jedoch auf Spuren von Wasser zurückzuführen sein, die beim Umfüllen oder Überführen in das Reaktionsgemisch gelangt sein könnten.

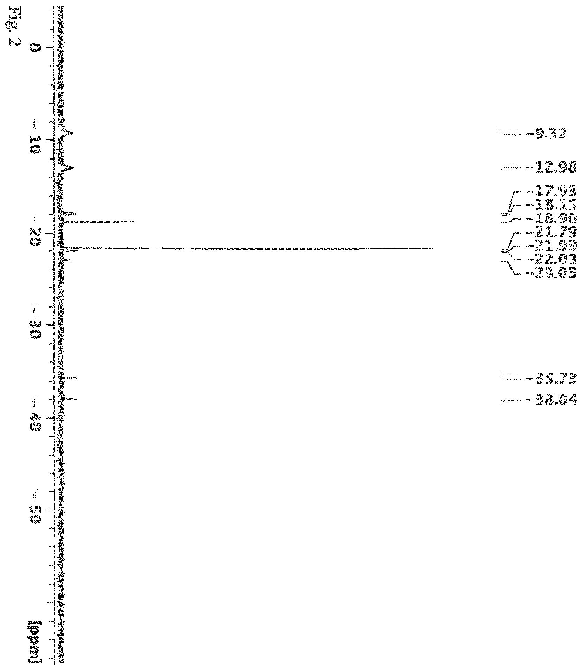

Der im Reaktionsglas enthaltene Feststoff wurde im Vakuum getrocknet. Es konnten 9.9 g (Ausbeute ≥ 80 %) isoliert werden. Das ²⁹Si-NMR-Spektrum in CD₂Cl₂ des Feststoffes zeigte die chemische Verschiebung von [Si₆Cl₁₄]²⁻ (21.8 ppm). Als Nebenprodukt konnte [Si₆Cl₁₃H]²⁻ (-36.9 ppm (d, J = 230 Hz, 1 Si), -23.0 ppm (d, J = 2 Hz, 1 Si), -22.0 ppm (d, J = 4 Hz, 2 Si), (-18.0 ppm (d, J = 22 Hz, 2 Si)) identifiziert werden. Außerdem waren noch HSiCl₃ (-11.1 ppm(d, J = 363 Hz)) und SiCl₄ (-18.9 ppm) im Spektrum zu identifizieren (siehe Fig. 2).

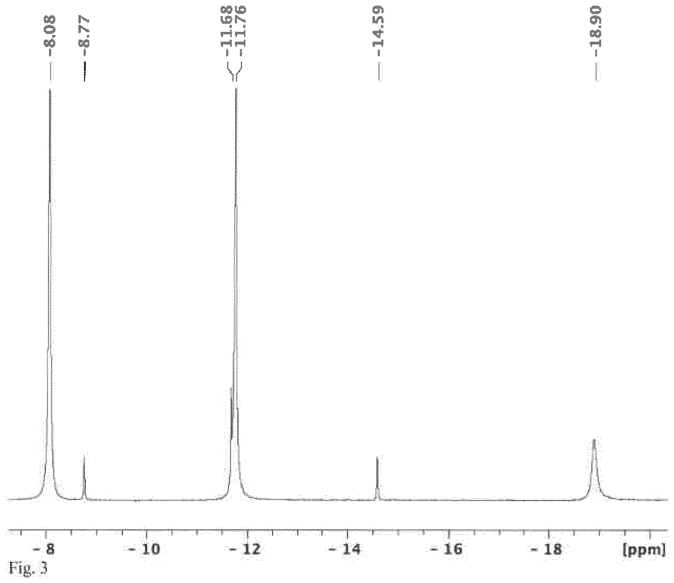

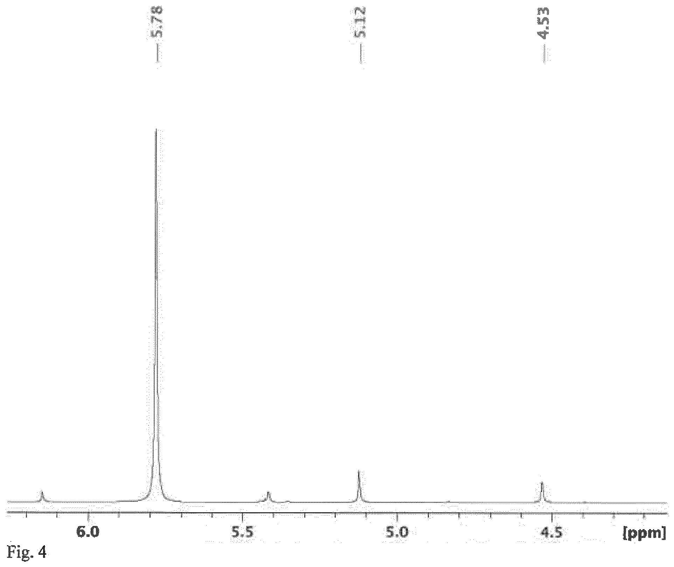

*Variante B:* Ein NMR-Rohr wurde, in einer Argon-Glovebox, mit [*n*Bu₄N]Cl (0.16 g, 0.6 mmol), HSiCl₃ (0.5 mL, 0.67 g, 5.0 mmol) und C₆D₆ (0.2 mL) gefüllt und im Vakuum abgeschmolzen. Das Lösungsmittel, C₆D₆, ist nur für die NMR-Messung notwendig und wurde aus verfahrenstechnischen Gründen schon am Anfang zugegeben. Die Beteiligung von Benzol in der Reaktion wurde in einem Versuch ohne Lösungsmittel ausgeschlossen. Das verschlossene NMR-Rohr wurde für 48 h auf 120 °C erhitzt. Nach der Reaktionsdauer wurde ein ²⁹Si-NMR-Spektrum gemessen. Im Spektrum konnten die chemischen Verschiebungen von HSiCl₃ (-9.9 ppm, d, J = 364 Hz), H₂SiCl₂ (-11.7 ppm, t, J = 289 Hz) und SiCl₄ (-18.9 ppm) identifiziert werden (siehe Fig. 3). Die Verschiebung des Produktes [Si₆Cl₁₄]²⁻ ist nicht vorhanden, weil es in Benzol eine geringe Löslichkeit hat. Es konnte röntgenkristallographisch eindeutig nachgewiesen werden. Im ¹H-NMR-Spektrum konnten neben den chemischen Verschiebungen der Butylgruppe die Verschiebungen von HSiCl₃ (5.78 ppm), H₂SiCl₂ (5.12 ppm) und H₂ (4.53 ppm) identifiziert werden (siehe Fig. 4). Die Durchführung dieser Reaktion in abgeschlossenen Glasgeräten ist äußerst gefährlich, da sie aufgrund der entstehenden Gase unter erheblichem Druck stehen. Der Versuch wurde nur im abgeschmolzenen NMR-Rohr durchgeführt, um die entstehenden Gase einwandfrei nachweisen zu können.

### Synthese von [Et₄N]₂[Si₆Cl₁₄] und [Ph₄P]₂[Si₆Cl₁₄]:

Die Synthesen mit [Et₄N]Cl und [Ph₄P]Cl als Edukt verlaufen analog zur Synthese ausgehend von [*n*Bu₄N]Cl. Die Ausbeuten sind aufgrund der schlechteren Löslichkeiten geringer (≤ 50 %); die Reaktionszeiten sind deshalb, mit vorzugsweise 72 Stunden, länger zu wählen. Es wird in beiden Fällen auch [Si₆Cl₁₃H]²⁻ mit dem entsprechenden Gegenion als Nebenprodukt erhalten. Die Analytik beschränkt sich in beiden Fällen auf Röntgenkristallographie, da die erhaltenen Hauptprodukte nicht löslich sind; mittels Einkristallstrukturanalyse wurde [Si₆Cl₁₄]²⁻ als Produkt eindeutig nachgewiesen.

Die in der vorstehenden Beschreibung, den Ansprüchen und den Zeichnungen offenbarten Merkmale der Erfindung können sowohl einzeln als auch in beliebiger Kombination für die Verwirklichung der Erfindung in ihren unterschiedlichen Ausführungsformen wesentlich sein.

## Patentansprüche

1. Verfahren zum Herstellen von perhalogeniertem Cyclohexasilan-Anion durch Umsetzen von halogeniertem Monosilan in Anwesenheit von organosubstituiertem Ammonium- und/oder Phosphoniumhalogenid bei Temperaturen in einem Bereich von 100 bis 120°C, wobei
kein Lösungsmittel verwendet und keine zusätzliche Lewis-Base zugegeben wird,
das halogenierte Monosilan Trichlorsilan oder Dichlorsilan ist, und
das organosubstituierte Ammonium- und/oder Phosphoniumhalogenid aus [*n*Bu₄N]Cl, [Et₄N]Cl, [Ph₄P]Cl und [*n*Bu₄P]Cl ausgewählt ist

2. Verfahren zum Herstellen von perhalogeniertem Cyclohexasilan-Anion nach Anspruch 1, wobei das halogenierte Monosilan Trichlorsilan ist.

3. Verfahren zum Herstellen von perhalogeniertem Cyclohexasilan-Anion nach Anspruch 1 oder 2, wobei kein Amin und/oder Phosphan zugegeben wird.

4. Verfahren zum Herstellen von perhalogeniertem Cyclohexasilan-Anion nach einem der vorangehenden Ansprüche, wobei die Reaktionszeit 12 bis 96 Stunden, vorzugsweise 24 bis 48 Stunden beträgt.

5. Verfahren zum Herstellen von perhalogeniertem Cyclohexasilan-Anion nach einem der vorangehenden Ansprüche, wobei das Verhältnis von halogeniertem Monosilan zu organosubstituiertem Ammonium- und/oder Phosphoniumhalogenid 3:1 bis 50:1, vorzugsweise 10:1 bis 20:1 beträgt.

6. Verfahren zum Herstellen von perhalogeniertem Cyclohexasilan-Anion nach einem der vorangehenden Ansprüche, wobei bei der Herstellung des Cyclohexasilan-Anions Wasserstoff (H₂) als Nebenprodukt erhalten wird.

## Claims

1. Process for preparing perhalogenated cyclohexasilane anion by reacting halogenated monosilane in the presence of organo-substituted ammonium and/or phosphonium halide at temperatures in a range from 100 to 120°C, wherein
no solvent is used and no additional Lewis base is added,
the halogenated monosilane is trichlorosilane or dichlorosilane, and
the organo-substituted ammonium and/or phosphonium halide is selected from [*n*Bu₄N]Cl, [Et₄N]Cl, [Ph₄P]Cl and [*n*Bu₄P]Cl.

2. Process for preparing perhalogenated cyclohexasilane anion according to Claim 1, wherein the halogenated monosilane is trichlorosilane.

3. Process for preparing perhalogenated cyclohexasilane anion according to Claim 1 or 2, wherein no amine and/or phosphane is added.

4. Process for preparing perhalogenated cyclohexasilane anion according to any of the preceding claims, wherein the reaction time is 12 to 96 hours, preferably 24 to 48 hours.

5. Process for preparing perhalogenated cyclohexasilane anion according to any of the preceding claims, wherein the ratio of halogenated monosilane to organo-substituted ammonium and/or phosphonium halide is 3:1 to 50:1, preferably 10:1 to 20:1.

6. Process for preparing perhalogenated cyclohexasilane anion according to any of the preceding claims, wherein hydrogen (H₂) is obtained as by-product when preparing the cyclohexasilane anion.

## Revendications

1. Procédé de fabrication d'un anion cyclohexasilane perhalogéné par mise en réaction d'un monosilane halogéné en présence d'un halogénure d'ammonium et/ou de phosphonium organo-substitué à des températures dans une plage allant de 100 à 120 °C,
aucun solvant n'étant utilisé et aucune base de Lewis supplémentaire n'étant ajoutée,
le monosilane halogéné étant le trichlorosilane ou le dichlorosilane, et
l'halogénure d'ammonium et/ou de phosphonium organo-substitué étant choisi parmi [*n*Bu₄N]Cl, [Et₄N]Cl, [Ph₄P]Cl et [*n*Bu₄P]Cl.

2. Procédé de fabrication d'un anion cyclohexasilane perhalogéné selon la revendication 1, dans lequel le monosilane halogéné est le trichlorosilane.

3. Procédé de fabrication d'un anion cyclohexasilane perhalogéné selon la revendication 1 ou 2, dans lequel aucune amine et/ou aucun phosphane n'est ajouté.

4. Procédé de fabrication d'un anion cyclohexasilane perhalogéné selon l'une quelconque des revendications précédentes, dans lequel la durée de réaction est de 12 à 96 heures, de préférence de 24 à 48 heures.

5. Procédé de fabrication d'un anion cyclohexasilane perhalogéné selon l'une quelconque des revendications précédentes, dans lequel le rapport entre le monosilane halogéné et l'halogénure d'ammonium et/ou de phosphonium organo-substitué est de 3:1 à 50:1, de préférence de 10:1 à 20:1.

6. Procédé de fabrication d'un anion cyclohexasilane perhalogéné selon l'une quelconque des revendications précédentes, dans lequel de l'hydrogène (H₂) est obtenu en tant que produit secondaire lors de la fabrication de l'anion cyclohexasilane.
